**Europäisches Patentamt**

**European Patent Office**

**Office européen des brevets**

(19)

(11) Veröffentlichungsnummer: **0 025 012**
**B1**

(12) **EUROPÄISCHE PATENTSCHRIFT**

(45) Veröffentlichungstag der Patentschrift:
30.11.83

(51) Int. Cl.³: **G 02 B 7/26**

(21) Anmeldenummer: **80810229.7**

(22) Anmeldetag: **17.07.80**

(54) Lichtleiterkupplung.

(30) Priorität: **15.08.79 CH 7466/79**

(43) Veröffentlichungstag der Anmeldung:
**11.03.81 Patentblatt 81/10**

(45) Bekanntmachung des Hinweises auf die Patenterteilung:
**30.11.83 Patentblatt 83/48**

(84) Benannte Vertragsstaaten:
**AT BE CH DE FR GB IT LI LU NL SE**

(56) Entgegenhaltungen:
**DE - A - 2 516 858**
**US - A - 3 914 880**

(73) Patentinhaber: **DIAMOND S.A., Via dei Patrizi,
CH-6616 Losone-Locarno (CH)**

(72) Erfinder: **Marazzi, Silvio, CH-6654 Cavigliano (CH)**

(74) Vertreter: **Hepp, Dieter, HEPP & Partner AG
Marktgasse 18, CH-9500 Wil (CH)**

BUNDESDRUCKEREI BERLIN

Lichtleiterkupplung

Die Erfindung betrifft eine Lichtleiterkupplung zum koaxialen Verbinden zweier Lichtfasern bestehend aus zwei die Lichtfasern enthaltenden zylindrischen Endkörpern und aus einer die Endkörper paßgenau aufnehmenden und diese zentrierenden Zylinderhülse.

Derartige Lichtfasern werden bereits seit geraumer Zeit anstelle von elektrischen Leitern für die Datenübertragung verwendet. Die Lichtleiterkupplungen haben die Aufgabe, die Signale von Lichtfaser zu Lichtfaser mit minimalen Verlusten weiterzuleiten. Dazu ist es erforderlich, die Glasfasern so nahe wie möglich, konzentrisch und koaxial zusammenzubringen Schon die geringste relative Verschiebung der beiden optischen Achsen würde zu erheblichen Verlusten führen. Die Lichtleiterkupplung muß außerdem den Glasfaserverbindungspunkt vor Umwelteinflüssen wie Feuchtigkeit, Staub, Erschütterungen usw. schützen.

Es sind bereits Lichtleiterkupplungen bekannt, bei denen die beiden in je einem Endkörper gelagerten Lichtfasern mittels einer zylindrischen Metallhülse zusammengehalten werden. Eine derartige Kupplung ist z. B. in der DAS 2 352 874 beschrieben. Um ein absolut spielfreies Zentrieren der beiden Lichtfasern in der Zentrierhülse zu gewährleisten, müssen Endkörper und Zentrierhülse außerordentlich fein bearbeitet werden. Dies führt jedoch dazu, daß beim Zusammenschieben der beiden Endkörper in der Zentrierhülse die darin eingeschlossene Luft praktisch nicht entweichen kann. Dadurch bildet sich zwischen den beiden Endkörpern ein federndes Luftpolster, welches im Extremfall verhindert, daß die beiden Lichtfasern aneinander anliegen. Das Bohren von Löchern in den Mantel der Zentrierhülse (vgl. US-A-3 914 880, Fig. 6) fällt praktisch außer Betracht, da durch diese Öffnungen Staub und Schmutz bis zu den Lichtfasern eindringen können. Derartige Bohrungen verursachen außerdem feine Brauen, welche im Innern der Zentrierhülse nicht mehr entfernt werden können und welche bereits dazu führen können, daß sich die optischen Achsen der Lichtfasern geringfügig verschieben.

Es ist daher Aufgabe der Erfindung, eine Lichtleiterkupplung zu schaffen, bei der auf optimale Weise gewährleistet ist, daß die Luft beim Zusammenkuppeln der Fasern aus der Zentrierhülse entweichen kann, ohne daß dabei Verunreinigungen oder Beeinträchtigungen der Zentrizität auftreten können. Diese Aufgabe wird durch die im Anspruch 1 gekennzeichnete Maßnahme gelöst. Durch die spiralenartige Anordnung des Entlüftungskanals im Innern der Zentrierhülse ist eine durch die Bearbeitung der Hülse hervorgerufene Beeinträchtigung der Zentrizität nicht möglich, da der Kanal nicht parallel zur Mittelachse der Hülse verläuft, sondern sich in einem bestimmten Winkel um diese Achse windet. Somit kommt ersichtlicherweise der gesamte Umfang eines Endkörpers an irgendeiner Stelle mit einem Entlüftungskanal bzw. dessen Randbereich in Berührung. Materialaufwerfungen im Randbereich des Entlüftungskanals, welche allenfalls Fehler verursachen könnten, erstrecken sich dadurch ebenfalls über den gesamten Umfang eines Endkörpers.

Damit die Luft in zwei Richtungen entweichen kann, erstreckt sich der spiralförmige Entlüftungskanal vorteilhaft zwischen beiden Stirnseiten der Zentrierhülse über die gesamte Länge des Innenmantels. Besonders vorteilhaft läßt sich die Erfindung realisieren, wenn der spiralenförmige Entlüftungskanal im Bereich des Innenmantels der Zentrierhülse in wenigstens einen Hohlraum zwischen einem Endkörper und dem Innenmantel mündet. Wegen der geringen Abmessungen des Entlüftungskanals braucht die Luft bei normaler Anpreßkraft in der Kupplung eine bestimmte Zeit, um zu entweichen. Diese Entlüftungszeit kann mit dem Hohlraum erheblich reduziert werden, da dieser Hohlraum als Expansionskammer wirkt, in welche ein Teil der auszupressenden Luft verdrängt wird. Ein Überdruck im Hohlraum verursacht keinerlei unerwünschte Kräfte in axialer Richtung.

Die Hohlräume lassen sich besonders einfach als Ringnuten am Innenmantel der Zentrierhülse ausbilden. Aus fabrikationstechnischen Gründen weist der Entlüftungskanal vorteilhaft einen etwa V-förmigen Querschnitt auf.

Um optimale Genauigkeitswerte der Bauteile zu erhalten, welche auch nach Jahren noch unverändert bleiben, wird die Zentrierhülse vorteilhaft aus einem Sinterwerkstoff oder aus einem monokristallinen Werkstoff gefertigt. Diese Werkstoffe sind hart, verschleißfest und chemisch inert und weisen außerdem kleine Wärmeausdehnungs-Koeffizienten auf. Es hat sich vor allem gezeigt, daß die Verwendung von Werkstoffen mit einer Mohs'schen Härte von gleich oder größer als 8,5 zu optimalen Verbindungen führt.

Ein Ausführungsbeispiel der Erfindung ist in den Zeichnungen dargestellt und wird nachstehend genauer beschrieben. Es zeigt

Fig. 1 einen Querschnitt durch eine erfindungsgemäße Lichtleiterkupplung,

Fig. 2 eine Zentrierhülse mit spiralenförmigem Entlüftungskanal,

Fig. 3 einen Querschnitt durch einen Entlüftungskanal in stark vergrößertem Maßstab, und

Fig. 4 einen zylindrischen Endkörper mit einem Entlüftungskanal im Außenmantel.

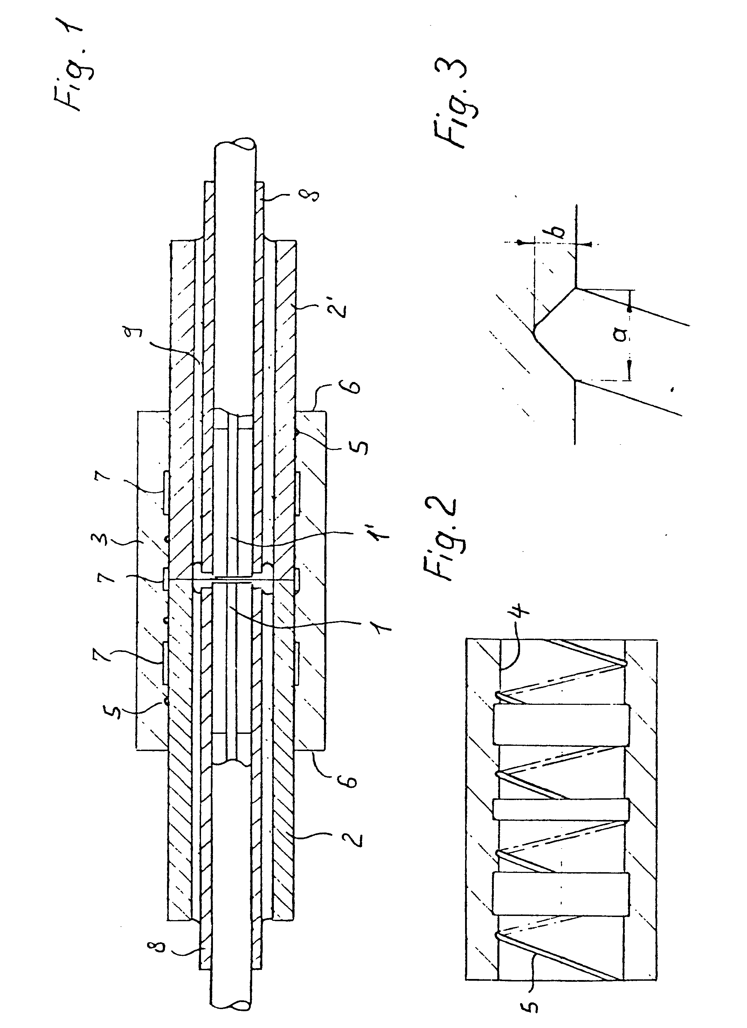

Bei der in Fig. 1 dargestellten Lichtleiterkupplung sind die beiden Lichtfasern 1 und 1' in Rohrstücke 8 eingebettet und mittels einer ausgehärteten Leimschicht 9 in ihrer Lage fixiert. Die Rohrstücke 8 wiederum werden durch die zylindrischen Endkörper 2 und 2' geführt, welche sich an ihren Stirnseiten gegenseitig berühren. Die Endkörper 2, 2' werden relativ zueinander mit der Zentrierhülse 3 zentriert, welche auch die Aufgabe hat, die Verbindungsstelle der Lichtfasern 1, 1' vor äußeren Einflüssen zu schützen. Der Innenmantel der Zentrierhülse 3 und der Außenmantel der zylindrischen Endkörper 2 werden unter Feinstbearbeitung auf den Tausendstel genau zusammengefügt. Die in der Zentrierhülse eingeschlossene Luft beim Zusammenschieben der beiden Endkörper 2 und 2' könnte ohne Entlüftung ersichtlicherweise praktisch nicht mehr nach außen entweichen. Der Innenmantel 4 der Zentrierhülse 3 ist daher mit einem spiralenförmigen Entlüftungskanal 5 versehen, der sich über die gesamte Länge der Zentrierhülse erstreckt. Wie in Fig. 3 dargestellt, hat der Entlüftungskanal vorteilhaft einen etwa V-förmigen Querschnitt mit der Breite a und der Tiefe b. Die Breite a kann beispielsweise 0,4 mm und die Tiefe b 0,2 mm betragen.

Um das Zusammenführen der beiden zylindrischen Endkörper 2, 2' bzw. das Entweichen der Luft zu beschleunigen, sind am Innenmantel 4 ringnutartige Hohlräume 7 angebracht, in welche der spiralenförmige Entlüftungskanal 5 mündet. Die Hohlräume 7 dienen als Kompressionskammern zur raschen Aufnahme von Luft, welche anschließend über den gegen die Stirnseite 6 führenden Entlüftungskanal langsam entweichen kann. Ersichtlicherweise ist es praktisch unmöglich, daß über den spiralenförmigen Entlüftungskanal 5 Schmutz an die Nahtstelle zwischen den beiden Lichtfasern gelangen kann. Durch die spiralenförmige Windung des Entlüftungskanals 5 wird eine einseitige Beeinflussung der Zentrizität zuverlässig vermieden.

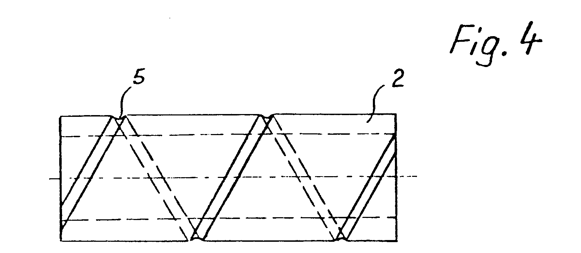

Wie in Fig. 4 dargestellt kann der spiralenförmige Entlüftungskanal 5 auch am Außenmantel der zylindrischen Endkörper 2 angeordnet sein. In bestimmten Fällen können auch die Hohlräume 7 an den Endkörpern 2 angeordnet sein.

Die Zentrierhülse 3 ist aus einem Sinterwerkstoff oder aus einem monokristallinen Werkstoff, wie z. B. Silizium-Nitrid, Bor-Nitrid, Oxyd-Keramik, Korund, Saphir oder Rubin, gefertigt. Diese Materialien lassen sich außerordentlich präzis und fein bearbeiten und gewährleisten außerdem optimale Resistenz gegen chemische, thermische und mechanische Einflüsse.

Selbstverständlich lassen sich am Erfindungsgegenstand Modifikationen vornehmen, ohne daß dabei der Gegenstand der Erfindung verlassen wird. So ist es z. B. denkbar, daß der Innenmantel 4 nach der Art eines mehrgängigen Gewindes mehrere Entlüftungskanäle 5 aufweist. Außerdem können die Querschnittsformen der Entlüftungskanäle sowie Anordnung und Konfiguration der Hohlräume beliebig abgewandelt werden.

**Patentansprüche**

1. Lichtleiterkupplung zum koaxialen Verbinden zweier Lichtfasern, bestehend aus zwei die Lichtfasern (1) enthaltenden zylindrischen Endkörpern (2) und aus einer die Endkörper paßgenau aufnehmenden und diese zentrierenden Zentrierhülse (3), die einen Entlüftungskanal aufweist, dadurch gekennzeichnet, daß als Entlüftungskanal am Innenmantel (4) der Zentrierhülse (3) und/oder am Außenmantel der zylindrischen Endkörper (2) wenigstens eine spiralförmige Nut (5) vorgesehen ist.

2. Lichtleiterkupplung nach Anspruch 1, dadurch gekennzeichnet, daß sich der spiralenförmige Entlüftungskanal (5) zwischen beiden Stirnseiten (6) der Zentrierhülse (3) über die gesamte Länge des Innenmantels (4) erstreckt.

3. Lichtleiterkupplung nach Anspruch 2, dadurch gekennzeichnet, daß der spiralenförmige Entlüftungskanal (5) im Bereich des Innenmantels der Zentrierhülse in wenigstens einen Hohlraum (7) zwischen einem Endkörper (2) und dem Innenmantel (4) mündet.

4. Lichtleiterkupplung nach Anspruch 3, dadurch gekennzeichnet, daß am Innenmantel (4) mehrere als Ringnut ausgebildete Hohlräume (7) vorgesehen sind.

5. Lichtleiterkupplung nach Anspruch 1, dadurch gekennzeichnet, daß der Entlüftungskanal (5) im Querschnitt etwa V-förmig ausgebildet ist.

6. Lichtleiterkupplung nach Anspruch 1, dadurch gekennzeichnet, daß die Zentrierhülse (3) aus einem Sinter-Werkstoff gefertigt ist.

7. Lichtleiterkupplung nach Anspruch 1, dadurch gekennzeichnet, daß die Zentrierhülse (3) aus einem monokristallinen Werkstoff gefertigt ist.

8. Lichtleiterkupplung nach Anspruch 1, dadurch gekennzeichnet, daß die Zentrierhülse (3) und die Endkörper (2) wenigstens an den miteinander in Eingriff stehenden Flächen aus einem Werkstoff mit einer Mohs'schen Härte von wenigstens 8,5 bestehen.

**Claims**

1. A light conduit connector for coaxially connecting two optical fibres, comprising two cylindrical end members (2) containing the optical fibres (1), and a centering sleeve (3) which accommodates the end members with an accurate fit and which centres same and which has a vent passage, characterised in that at least one helical groove (5) is provided as the vent passage, on the inside peripheral surface (4) of the centering sleeve (3) and/or on the outside peripheral surface of the cylindrical end members (2).

2. A light conduit connector according to claim 1 characterised in that the helical vent passage (5) extends over the entire length of the inside peripheral surface (4) of the centering sleeve (3), between the two ends (6) thereof.

3. A light conduit connector according to claim 2 characterised in that the helical vent passage (5) opens in the region of the inside peripheral surface of the centering sleeve, into at least one hollow space (7) between an end member (2) and the inside peripheral surface (4).

4. A light conduit connector according to claim 3 characterised in that a plurality of hollow spaces (7), formed as an annular groove, are provided on the inside peripheral surface (4).

5. A light conduit connector according to claim 1 characterised in that the vent passage (5) is of substantially V-shaped crossection.

6. A light conduit connector according to claim 1 characterised in that the centering sleeve (3) is made from a sintered material.

7. A light conduit connector according to claim 1 characterised in that the centering sleeve (3) is made from a monocrystalline material.

8. A light conduit connector according to claim 1 characterised in that the centering sleeve (3) and the end members (2), at least at the surfaces which are engaged with each other, comprise a material of a hardness on the Mohs'scale of at least 8.5.

**Revendications**

1. Coupleur de guides de lumière pour relier coaxialement deux fibres optiques, comprenant deux éléments d'extrémité cylindriques (2) contenant les fibres optiques (1) et un manchon cylindrique de centrage (3) recevant avec précision les éléments d'extrémité et assurant le centrage de ceux-ci, ce manchon comportant un canal de ventilation, caractérisé en ce que pour faire fonction de canal de ventilation, au moins une rainure en spirale (5) est prévue dans la surface intérieure (4) du manchon de centrage (3) et/ou dans la surface extérieure des éléments d'extrémité cylindriques (2).

2. Coupleur de guides de lumière selon la revendication 1, caractérisé en ce que le canal de ventilation en spirale (5) s'étend, entre les deux faces frontales (6) du manchon de centrage (3), sur toute la longueur de la surface intérieure (4).

3. Coupleur de guides de lumière selon la revendication 2, caractérisé en ce que le canal de ventilation en spirale (5) débouche dans la région de la surface intérieure du manchon de centrage, dans au moins une cavité (7) formée entre un élément d'extrémité (2) et la surface intérieure (4).

4. Coupleur de guides de lumière selon la revendication 3, caractérisé en ce que la surface intérieure (4) ont été prévues plusieurs cavités (7) ayant la forme de rainures annulaires.

5. Coupleur de guides de lumière selon la revendication 1, caractérisé en ce que canal de ventilation (5) présente approximativement une section en V.

6. Coupleur de guides de lumière selon la revendication 1, caractérisé en ce que le manchon de centrage (3) est fabriqué dans une matière frittée.

7. Coupleur de guides de lumière selon la revendication 1, caractérisé en ce que le manchon de centrage (3) est fabriqué en une matière monocristalline.

8. Coupleur de guides de lumière selon la revendication 1, caractérisé en ce que le manchon de centrage (3) et les éléments d'extrémité (2) sont constitués, au moins à leurs surfaces de contact, par une matière ayant une dureté d'au moins 8,5 sur l'échelle de Mohs.

Fig. 1

Fig. 2

Fig. 3

Fig. 4